# FASCICULE DE BREVET EUROPEEN

(11) **EP 3 976 869 B1**
(45) Date de publication et mention de la délivrance du brevet: **21.05.2025**
(21) Numéro de dépôt: 20742798.0
(22) Date de dépôt: 03.06.2020
(51) Int. Cl.: B29B 11/16, D03D 25/00, D03D 41/00

(54) **PROCÉDÉ DE FABRICATION D'UN SECTEUR D'ANNEAU**
VERFAHREN ZUR HERSTELLUNG EINES RINGSEKTORS
METHOD FOR MANUFACTURING A RING SECTOR

(30) Priorité: 03.06.2019 FR 1905867
(43) Date de publication de la demande: 06.04.2022
(73) Titulaire: Safran Ceramics, 33185 Le Haillan (FR)
(72) Inventeur: TESSON, Thierry, Guy, Xavier, 77550 Moissy-Cramayel (FR); PHILIPPE, Eric, 77550 Moissy-Cramayel (FR); LEFEBVRE, Marie, 77550 Moissy-Cramayel (FR); PLANCKEEL, Aline, 77550 Moissy-Cramayel (FR)
(74) Mandataire: Ernest Gutmann - Yves Plasseraud S.A.S.
(86) Numéro de dépôt international: PCT/FR2020/050952
(87) Numéro de publication internationale: WO 2020/245545

(56) Documents cités:
- EP-A1- 1 379 716
- EP-B1- 1 379 716
- WO-A1-2018/179878
- US-A- 4 922 968

## Description

### Domaine technique de l'invention

La présente invention concerne la fabrication d'une structure fibreuse pour la réalisation de pièces composites destinées à être intégrées par exemples dans une turbomachine.

### Etat de la technique antérieure

Les pièces composites, en particulier de pièces composites à matrice céramique (CMC), sont de plus en plus utilisées pour remplacer les pièces métalliques intégrées dans les turbomachines. En effet, les pièces CMC présentent des propriétés mécaniques à haute température particulièrement intéressantes, idéales pour la conception, par exemple, de stators ou de distributeurs de turbines. Dans ces deux exemples, des pièces CMC sectorisées sont disposées et assemblées sur un carter métallique, et reliées entre elles par des liaisons étanches, afin d'assurer l'étanchéité de la veine malgré les dilatations thermiques engendrées par les hautes températures de fonctionnement.

Dans le domaine de l'aéronautique, pour les applications précitées, les matériaux CMC utilisés sont à base de fibres SiC et de matrice SiC.

Les fibres SiC sont intégrées dans le matériau CMC sous forme de structures fibreuses, obtenues, par exemple, par tissage tridimensionnel. Il s'agit d'un tissage multicouche utilisant plusieurs couches de fils de trame et plusieurs couches de fils de chaîne, avec des fils de chaîne qui lient entre elles différentes couches de fils de trame. Différents types d'armures de tissage 3D peuvent être utilisés, par exemple des armures interlock, multi-satin, multi-toile, multi-sergé.

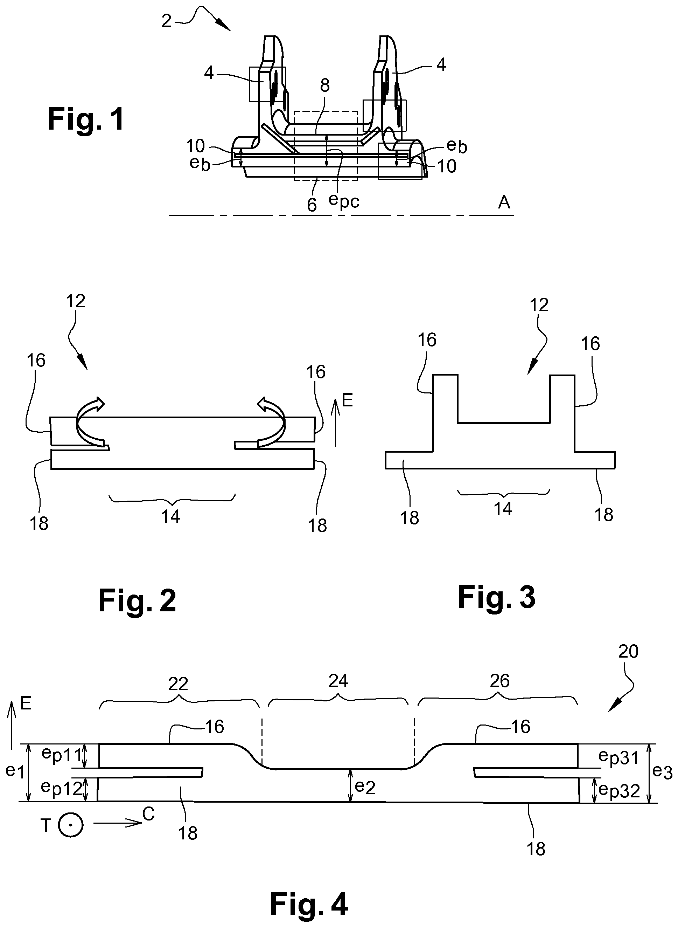

La figure 1 représente un secteur de stator 2 qui est destiné à être monté en vis-à-vis radial de sommets d'aubes mobiles. Il comprend deux brides 4 radiales espacées axialement l'une de l'autre et reliées intérieurement à un secteur de paroi 6 annulaire lequel comprend une portion centrale 8 reliant les deux brides 4 et des béquets 10 s'étendant dans des sens opposés depuis les extrémités axiales de la portion centrale 8. Les termes « radial » et « axial » sont à considérer en relation avec l'axe A du secteur angulaire, cet axe correspondant à l'axe autour duquel une pluralité de secteurs sont destinés à être agencés pour entourer une roue aubagée.

Comme cela est visible sur la figure 1, la portion centrale 8 également appelée baignoire présente une épaisseur e_{pc} supérieure à l'épaisseur des becquets e_{b}. L'épaisseur est mesurée en direction radiale. Cela est directement lié au procédé de fabrication de la structure fibreuse 12.

Pour réaliser le secteur d'anneau 2 de la figure 1, on réalise en premier lieu une structure fibreuse 12 telle que représentée en figure 2.

Cette structure fibreuse 12 comprend une partie centrale 14 reliée, à chacune de ses extrémités, à une première 16 et une deuxième 18 portions, déliées entre elles. La portion centrale 14 de la structure fibreuse 12 est destinée à former la partie centrale 8 du secteur d'anneau 2 et les premières 16 et secondes 18 portions son destinées à former les becquets 10 et les brides 4 du secteur d'anneau 2.

La partie centrale 14 comprend x couches de chaînes tissées, les premières portions 16 comprend chacune z couches de chaînes tissées et les deuxièmes portions 18 comprend chacune y couches de chaînes tissées. Les couches de chaînes sont disposées selon une épaisseur, indiquée sur la figure par la direction E.

L'absence de liaison dans l'épaisseur entre les première 16 et deuxième 18 portions permet de les rendre structurellement indépendantes entre elles et donc de les conformer dans des directions différentes dans un moule.

Ainsi, une fois la structure fibreuse 12 obtenue, elle est conformée afin de présenter une forme similaire à la pièce souhaitée c'est-à-dire en « Pi » dans l'exemple considéré, comme illustrée à la figure 3. Les premières portions 16, de part et d'autre de la partie centrale 14, sont ainsi déployées de sorte à obtenir une préforme fibreuse présentant la topologie en « Pi » du secteur d'anneau 2 présenté en figure 1.

Avec la technique actuelle de tissage, le ratio chaine/trame est identique en tout point de la pièce tissée. Ainsi, le nombre de couches de chaînes de la partie centrale 14 dépend alors du nombre de couches de chaînes des première 16 et deuxième 18 portions, et sont liés par la formule suivante *x* = *y* + *z*.

L'interdépendance des nombres de couches de chaînes et de trames, avec un ratio chaine / trame constant, et donc de leurs épaisseurs respectives, de la partie centrale 14 et des première 16 et deuxième 18 portions, engendre une épaisseur, fonctionnellement non nécessaire, au niveau de la partie centrale 14. En effet, la partie centrale 8 nécessite fonctionnellement une épaisseur e_{pc} minimum équivalente à l'épaisseur e_{b} des becquets 10. Il est également envisageable d'avoir une épaisseur e_{pc} de la partie centrale 8 sensiblement supérieure à l'épaisseur e_{b} des becquets 10. Cet excès d'épaisseur entraîne une utilisation d'une quantité de matériau fibreux fonctionnellement inutile, alors que ce matériau est un élément coûteux.

Il est donc nécessaire, pour des questions de coût et également de masse, de réduire l'épaisseur de la partie centrale 14 de la structure fibreuse 12, et donc d'obtenir une structure fibreuse 12 à épaisseur variable.

Une solution dite de « trimming » est utilisée dans la conception d'aubes composite à matrice organique (CMO). Cette méthode consiste à sortir des fils de chaîne et de trame de la structure fibreuse en changeant l'armure de tissage. Les fils sortis sont par la suite coupés, permettant d'obtenir une structure fibreuse avec une épaisseur évolutive le long de la direction chaîne. Une telle méthode ne peut pas être utilisée pour une pièce composite à matrice céramique CMC, notamment à cause de la fragilité des fibres utilisées. La méthode de *trimming* fragiliserait alors la structure fibreuse obtenue, et par conséquent la préforme.

De plus, les faibles dimensions des pièces précitées impliquent d'avoir des préformes de faibles dimensions, sur lesquelles il est difficile de réaliser des sorties de fils de chaine, qui seraient ensuite coupés selon le procédé de *trimming.*

L'invention vise à remédier aux inconvénients précités, de façon fiable, simple et peu onéreuse.

Il est connu le document EP1379716A1. Par ailleurs, une structure fibreuse selon le préambule de la revendication 1 est connue du document US4922968A.

### Résumé de l'invention

Le présent document concerne tout d'abord une structure fibreuse multicouches tissée tridimensionnellement présentant un même nombre de fils de chaîne tissés à tout niveau le long de la direction chaîne, la structure fibreuse comprenant, en direction chaîne, une première partie et une deuxième partie, la première partie ayant une épaisseur, mesurée dans une direction perpendiculaire aux directions chaîne et trame, supérieure à la deuxième partie, caractérisée en ce que l'écartement entre deux plans de trame le long de la direction chaîne est supérieur dans la deuxième partie à celui de la première partie, et en ce que le nombre de fil de trame est inférieur dans la deuxième partie à celui de la première partie.

Ainsi, en faisant varier le ratio chaîne-trame en jouant sur deux paramètres, l'espacement entre deux colonnes de trames successives le long de la direction chaîne et l'insertion ou le désengagement local de fils de trames, l'épaisseur de la deuxième partie n'est plus dépendante de l'épaisseur de la première partie. La structure fibreuse alors obtenue par tissage tridimensionnel présente une épaisseur de la première partie supérieure à l'épaisseur de la deuxième partie.

Le nombre de fil de trame par plan de trame de la deuxième partie peut être inférieure au nombre de fil de trame par plan de trame de la première partie.

Cette méthode est ainsi compatible avec la réalisation de structure fibreuse pour pièce CMC, car elle ne nécessite pas l'utilisation de la méthode de *trimming* pour faire varier épaisseur.

La première partie de la structure fibreuse peut comprendre une première portion et une seconde portion, la première portion étant agencée, selon ladite direction perpendiculaire, au-dessus d'une seconde portion et étant structurellement indépendante de la seconde portion, lesdites première portion et seconde portion de la première partie étant tissées à la deuxième partie au niveau d'une transition de la première partie à la deuxième partie.

Les première et seconde portions de la structure fibreuse en particulier, constituent les éléments de la structure fibreuse qui formeront, une fois conformés, le becquet et la bride du secteur d'anneau. Une conformation dans des directions, perpendiculaires de préférence, des première et deuxième portions est permise grâce à cette indépendance structurelle.

Le nombre de fils de trame peut être supérieur au nombre de fil de chaîne dans l'une et/ou l'autre de la première portion et de la seconde portion.

Une autre possibilité pour réduire l'épaisseur de la deuxième partie est de faire varier le ratio chaîne-trame au niveau de la première partie, c'est-à-dire au niveau des première et seconde portions de la première partie. Cela permet ainsi de réduire le nombre de couches de chaînes à tisser dans la deuxième partie.

Dans la deuxième partie, le nombre de fils de trame peut être inférieur au nombre de fil de chaînes.

La non-insertion de certains fils de trame, présents dans l'armure de base, est ainsi réalisée afin de modifier le ratio chaîne/trame, en modifiant ou non l'espacement entre les colonnes de trames, dans la limite d'un ratio 75/25, permettant alors de réduire l'épaisseur par rapport à l'épaisseur de la première partie.

L'écartement entre deux plans de chaîne peut être identique entre la première partie et la deuxième partie. En pratique, cela s'avère plus simple à réaliser qu'un écartement variable. L'écartement entre deux plans de trame peut être identique entre la première partie et la deuxième partie, et l'écartement entre deux plans de chaîne peut être différent.

Il est envisageable dans le cas particulier non illustré d'un tissage de pièces à 90° par rapport à l'orientation présenté dans ce document, de jouer sur l'espacement entre deux plans de chaînes successifs et maintenant l'espacement entre deux plans de trames successifs constant.

En pratique, il s'avère plus facile de modifier les paramètres liés aux fils de trames sur le métier à tisser. Ainsi, il est plus aisé de fixer les paramètres liés à l'espacement entre deux couches de chaînes successives et le nombre de chaînes dans les première et deuxième parties.

La structure fibreuse peut comprendre une troisième partie identique à la première partie et tissée à la deuxième partie le long de la direction chaîne à l'opposé de la première partie.

La troisième partie de la structure fibreuse peut comprendre une première portion et une seconde portion, la première portion étant agencée, selon ladite direction perpendiculaire, au-dessus d'une seconde portion et étant structurellement indépendante de la seconde portion, lesdites première portion et seconde portion de la troisième partie étant tissées à la deuxième partie au niveau d'une transition de la première partie à la deuxième partie.

Le nombre de fil de trame par plan de trame de la deuxième partie est de préférence inférieure au nombre de fil de trame par plan de trame de la troisième partie. Dans cet exemple, la structure fibreuse présente un axe de symétrie, similairement au secteur d'anneau présenté précédemment. La structure fibreuse est donc conformée en « Pi » une forme voisine du secteur d'anneau que l'on souhaite réaliser. Ainsi, une telle structure fibreuse peut former une préforme présentant une épaisseur au niveau de la deuxième partie pouvant être inférieure ou égale à l'épaisseur de la première partie et de la troisième partie. La deuxième partie, formant, dans la préforme fibreuse, la partie centrale ou baignoire, présente alors une épaisseur adaptée et suffisante au regard des exigences thermiques et mécaniques nécessaires pour l'utilisation de cette pièce.

Le présent document concerne également un procédé de fabrication d'une structure fibreuse telle que décrite précédemment, dans lequel lors de la transition en direction chaîne de la première partie de la texture fibreuse à la deuxième partie de la texture fibreuse, on diminue le nombre de fil de trame et on augmente l'écartement entre deux plans de trame successifs le long de la direction chaîne.

De plus, le présent document porte aussi sur un procédé de fabrication d'une structure fibreuse telle que décrite précédemment, dans lequel lors de la transition en direction de chaine de la deuxième partie de la texture fibreuse à la première partie de la texture fibreuse, on augmente le nombre de fils de trame et on diminue l'écartement entre deux plans de trames successifs le long de la direction de chaine.

Le présent document porte aussi sur un procédé de fabrication d'un matériau composite, comprenant les étapes suivantes :
a) Obtenir une structure fibreuse au moyen du procédé tel que décrit précédemment ;
b) Conformation de la structure fibreuse ;
c) Obtenir un matériau composite par injection d'une matrice à l'intérieur de la structure fibreuse.

Le matériau composite obtenu contient alors une quantité réduite de matériau fibreux, réduisant de fait son coût de production ainsi que sa masse.

L'invention sera mieux comprise et d'autres détails, caractéristiques et avantages de l'invention apparaîtront à la lecture de la description suivante faite à titre d'exemple non limitatif en référence aux dessins annexés

### Brève description des figures

[Fig. 1] décrite précédemment, est une vue en perspective d'un secteur d'anneau selon l'art antérieur ;
[Fig. 2] décrite précédemment, est une représentation schématique d'une structure fibreuse pour la fabrication du secteur d'anneau de la figure 1 obtenue selon la technique antérieure ;
[Fig. 3] décrite précédemment, est une représentation schématique de la conformation 3D en Pi de la structure fibreuse d'un secteur d'anneau ;
[Fig. 4] est une illustration schématique de la structure fibreuse selon l'invention ;
[Fig. 5] est un schéma d'un secteur d'anneau intégrant la structure fibreuse de la figure 4.

### Description détaillée de l'invention

Dans les modes de réalisations détaillés ci-après, la structure fibreuse tissée à partir de fibres SiC, de préférence, présente un taux de fibres volumique cible compris entre 25 et 50%.

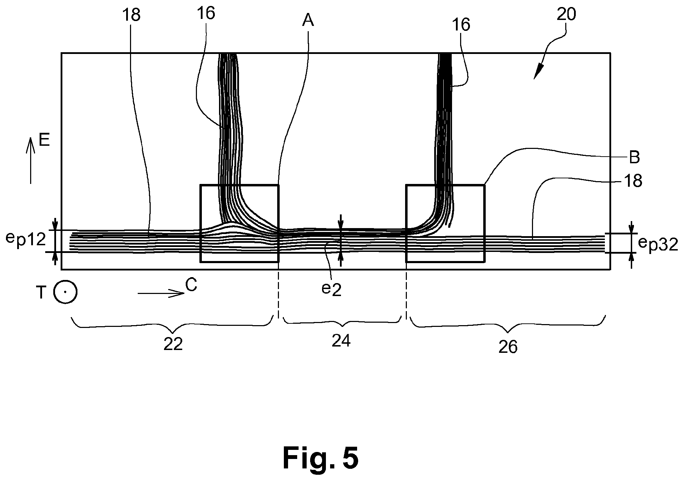

La figure 5 est un schéma d'une structure fibreuse 20 selon l'invention sur laquelle sont représentées une direction de chaine C et une direction de trame T et une direction E, ces directions étant perpendiculaires deux à deux. Cette structure fibreuse 20 présente un même nombre de fils de chaîne tissés à tout niveau de la structure fibreuse le long de la direction chaîne C.

La structure fibreuse 20 comprend une première partie 22, une deuxième partie 24 et une troisième partie 26 selon la direction chaîne C, mieux visible sur l'illustration schématique de la structure fibreuse 20 avant conformation. Les première 22, deuxième 24 et troisième 26 parties présentent chacune une épaisseur e₁, e₂, e₃ mesurée selon une direction E perpendiculaire aux directions chaîne et trame. Dans cet exemple, la structure fibreuse 20 comprend une deuxième partie 24 dont l'épaisseur e₂ est inférieure à l'épaisseur e₁, e₂ de chacune de la première partie 22 et de la troisième partie 26.

Les première 22 et troisième 26 parties comprennent chacune une première portion 16 et une seconde 18 portion. Une fois la structure fibreuse 20 conformée en Pi comme cela est visible sur la figure 5, les premières portions 16 des première 22 et troisième 26 parties sont disposées afin de former un angle non nul, de préférence compris entre 0° et 45°, avec respectivement les deuxièmes portions 18 des première 22 et troisième 26 parties.

Avant cette conformation de la structure fibreuse 20, c'est-à-dire à la fin du tissage tridimensionnel, pour chacune des première 22 et troisième 26 parties, la première portion 16 est agencée au-dessus de la seconde portion 18 suivant la direction E, aussi appelé direction suivant l'épaisseur. Les première 16 et seconde 18 portions, bien que tissées simultanément, sont structurellement indépendantes, c'est-à-dire qu'elles ne sont pas tissées l'une à l'autre, ce qui permet une disposition des première portions 16, formant un angle non nul avec les deuxièmes portions 18 et la deuxième partie 24. Les première 16 et seconde 18 portions des premières 22 et troisièmes 26 parties présentent chacune une épaisseur, selon la direction E, respectivement eₚ₁₁, eₚ₁₂, eₚ₃₁ et e_{p32,} tel que *e*_{*p*11} + *e*_{*p*12} *= e*₁ *et e*_{*p*31} + *e*_{*p*32} *= e*₃*.*

Pour la suite, on supposera que les épaisseurs des premières et deuxièmes portions, sont identiques pour les première et troisième parties, c'est-à-dire que *e*_{*p*11} *=* e_{*p*31} *et e*_{*p*12} *= e*_{*p*32}*.* Bien entendu, il est envisageable que les épaisseurs *e*₁ et *e*₃ soient différentes, et également que les épaisseurs *e*_{*p*11}*, e*_{*p*31}*, e*_{*p*12} *et e*_{*p*32} soient différentes les unes des autres deux à deux. La première portion 16 et la seconde portion 18 de la première partie 22 sont tissées à la deuxième partie 24 au niveau d'une transition de la première partie 22 à la deuxième partie 24. De manière similaire, les première portion 16 et seconde portion 18 de la troisième partie 26 sont tissées à la deuxième partie 24 au niveau d'une transition de la troisième partie 26 à la deuxième partie 24. Ces transitions, indiquées par deux encadrés A et B, correspondent à un entrelacement des fils provenant de la première portion 16 et de la deuxième portion 18 de la première partie 22, pour former la deuxième partie 24.

La structure fibreuse 20 se caractérise par l'écartement entre deux plans de trame le long de la direction chaîne C qui est supérieure dans la deuxième partie 24 à celui de la première partie 22 et de la troisième partie 26. De plus, le nombre de fils de trame est inférieur dans la deuxième partie 24 à celui de la première partie 22 et à celui de la troisième partie 26. Plus spécifiquement, le nombre de fil de trame par plan de trame de la deuxième partie est inférieure au nombre de fil de trame par plan de trame de la première partie. De manière similaire, le nombre de fil de trame par plan de trame de la deuxième partie peut être inférieure au nombre de fil de trame par plan de trame de la troisième partie. Cela permet d'influer sur le ratio chaîne-trame des première 22 et troisième 26 parties relativement à celui de la deuxième partie 24, pour limiter l'épaisseur de la deuxième partie 24, sans réaliser de trimming. La deuxième partie 24 de la structure fibreuse 20 présente ainsi une épaisseur telle que *e*₂ ≤ e₁ *et e*₂ ≤ *e*₃*.*

Le tableau 1 ci-dessous illustre un exemple de structure fibreuse 12 selon la technique antérieure, comprenant une première partie et une deuxième partie comprenant une première portion 16 et une seconde portion 18, selon l'art antérieur, où la deuxième partie 14 présente une épaisseur *e*₂ > *e*_{*p*12} et en particulier où *e*₁ = *e*₂*.*

**[Tableau 1]**

| Zones | 1 ^{ère} partie | | 2ème partie |
|---|---|---|---|
| | 1ère portion | 2ème portion | |
| Nombre de couches | 14 | 7 | 21 |
| Nombre de plans de trames | 14 | 7 | 21 |
| Nombre de plan de chaînes | 14 | 7 | 21 |
| Espacement chaînes (mm) | 1,25 | 1,25 | 1,25 |
| Espacement trames (mm) | 1,25 | 1,25 | 1,25 |
| RCT (ratio chaîne/trame) | 50/50 | 50/50 | 50/50 |
| Epaisseur obtenue en moulage (mm) | 4 | 2 | 6 |

Cette structure fibreuse 12 réalisée selon la technique antérieure, à partir de 21 couches textiles par un tissage tridimensionnel multicouches de la structure fibreuse 12 présente un ratio chaîne-trame de 50/50 invariant dans les différentes parties de la structure fibreuse 12. Dans ce cas, le nombre de couche, de plan de chaînes et de trames de la deuxième partie 14 est égal à la somme respectivement des nombres de couches, de plan de chaînes et de trames des première 16 et seconde 18 portions de la deuxième partie 14 (et de la troisième partie le cas échéant).

La structure fibreuse 20 selon l'invention, permet de limiter l'épaisseur *e*₂ de la deuxième partie 24, destinée à former la baignoire, de sorte que son épaisseur *e*₂ est proche de l'épaisseur *e*_{*p*12} de la seconde portion 18 de la première partie 22 (et la troisième partie 26 dans le cas échéant). En d'autres termes, *e*₁, *e*₂ et *e*₃ peuvent ainsi être différentes et ceci sans *trimming.* Le tableau 2 illustre une structure fibreuse 20 selon une première réalisation de l'invention, comprenant une première partie 22 et une deuxième partie 24 comprenant elle-même une première 16 et une seconde 18 portion :

**[Tableau 2]**

| Zones | 1 ^{ère} partie | | 2ème partie |
|---|---|---|---|
| | 1ère portion | 2ème portion | |
| Nombre de couches | 14 | 7 | 21 |
| Nombre de plans de trames | 14 | 7 | 9 |
| Nombre de plan de chaînes | 14 | 7 | 21 |
| Espacement chaînes (mm) | 1,25 | 1,25 | 1,25 |
| Espacement trames (mm) | 1,25 | 1,25 | 1,5 |
| RCT (ratio chaîne/trame) | 50/50 | 50/50 | 74/26 |
| Epaisseur obtenue en moulage (mm) | 4 | 2 | 4,1 |

L'épaisseur *e*₂ de la deuxième partie 24 de cette structure fibreuse 20, une fois conformée, est réduite à 4,1 mm, avec des paramètres, pour les première 16 et seconde 18 portions de la première partie 22, inchangés par rapport au tableau 1 illustrant l'art antérieur. Pour cela, l'écartement entre deux plans de trame le long de la direction chaîne est augmenté, de 1,25 mm à 1,5 mm, de sorte à le rendre supérieur à l'espacement entre deux plans de trames consécutifs dans la première partie 22, en particulier dans les première 16 et seconde 18 portions de la première partie 22. De plus, le nombre de fils de trame de la deuxième partie 24 est inférieur à la somme des nombres de fils de trame de la première partie 22 c'est-à-dire de la somme des fils de trame de première 16 et seconde 18 portions de la première partie 22, en désengageant localement des fils de trames au niveau de la transition A entre la première 22 et deuxième 24 parties, afin d'atteindre un ratio chaîne-trame voisin de la limite 75/25.

Ainsi, la combinaison de l'augmentation de l'espacement entre deux plans de trames consécutifs et la non-insertion locale de fils de trames, de sorte à réduire les plans de trames [, déséquilibre le ratio chaîne-trame, dans l'exemple illustré à 74/26. Cela permet ainsi de réduire de 1,9 mm l'épaisseur *e*₂ de la deuxième partie 24 de la structure fibreuse 20 destinée à former la baignoire du secteur d'anneau par rapport à la structure fibreuse 12 de l'art antérieur illustré par le tableau 2.

Ainsi, dans la deuxième partie 24 de la structure fibreuse 20, le nombre de fils de trame est inférieur au nombre de fil de chaînes, respectivement à 9 et 21. Pour des raisons pratiques, le déséquilibre du ratio chaîne-trame est réalisé en jouant sur l'espacement entre deux plans de trames successifs, et non l'espacement entre deux plans de chaînes successifs. Il en résulte que l'écartement entre deux plans de chaînes est identique entre la première partie 22 et la deuxième partie 24.

Il est envisageable dans le cas particulier non illustré d'un tissage de pièces à 90° par rapport à l'orientation présenté dans ce document, de jouer sur l'espacement entre deux plans de chaînes successifs et maintenant l'espacement entre deux plans de trames successifs constant.

Bien que l'exemple illustré ici, décrit la situation particulière avec une structure fibreuse 20 ayant une première 22 et deuxième 24 partie, la structure fibreuse 20 peut comprendre une troisième partie 26 identique à la première partie 22 et tissée à la deuxième partie 24 le long de la direction chaîne à l'opposé de la première partie 22.

Le tableau 3 illustre les caractéristiques d'une structure fibreuse 20 selon une deuxième réalisation de l'invention, comprenant une première partie 22 et une deuxième partie 24 comprenant elle-même une première 16 et une seconde 18 portion :

**[Tableau 3]**

| Zones | 1 ^{ère} partie | | 2ème partie |
|---|---|---|---|
| | 1ère portion | 2ème portion | |
| Nombre de couches | 10 | 6 | 16 |
| Nombre de plans de trames | 15 | 7 | 16 |
| Nombre de plan de chaînes | 10 | 6 | 16 |
| Espacement chaînes (mm) | 1,25 | 1,25 | 1,25 |
| Espacement trames (mm) | 1 | 1 | 1,5 |
| RCT (ratio chaîne/trame) | 35/65 | 41/59 | 55/45 |
| Epaisseur obtenue en moulage (mm) | 4,1 | 2,1 | 4,2 |

Dans cette structure 20, on fait varier le ratio chaîne-trame dans les première 16 et seconde 18 portions de la première partie 22, afin de réduire le nombre de couches textiles tissées par la suite dans la deuxième partie 24.

Ainsi, dans la seconde portion 18 de la première partie 22, le nombre de plan de trames est supérieur du nombre de plan de chaîne. Dans la première portion 16 de la première partie 22, le nombre de plan de trames est égal à 1,5 fois le nombre de plan de chaînes. L'espacement entre deux plans de trames successifs dans les première 16 et seconde 18 portion est réduit à 1 mm.

La modification de ces paramètres, déséquilibrant le ratio chaîne trame des première 16 et seconde 18 portions respectivement à 41/59 et 35/65, combinée à une augmentation de l'espacement entre deux plans de trames successifs, permet donc d'obtenir, pour une épaisseur de 2,1 mm et 4,1 mm respectivement pour les première 16 et seconde 18 portions de la structure fibreuse 20 conformée, une épaisseur *e*₂ de la deuxième partie 24 égale à 4,2 mm.

Dans cet exemple de structure fibreuse 20, le nombre de fils de trame est supérieur au nombre de fils de chaînes dans la première portion 16 et dans la seconde portion 18 de la première partie 22 de la structure fibreuse 20.

L'invention concerne également une structure fibreuse 22, dont l'épaisseur *e*₂ de la deuxième partie 24 est inférieure à l'épaisseur de la première partie 22, c'est-à-dire de la somme des épaisseurs première 16 et seconde 18 portions. Le tableau 4 illustre une troisième réalisation de l'invention :

**[Tableau 4]**

| Zones | 1 ^{ère} partie | | 2ème partie |
|---|---|---|---|
| | 1ère portion | 2ème portion | |
| Nombre de couches | 10 | 6 | 16 |
| Nombre de plans de trames | 15 | 7 | 7 |
| Nombre de plan de chaînes | 10 | 6 | 16 |
| Espacement chaînes (mm) | 1,25 | 1,25 | 1,25 |
| Espacement trames (mm) | 1 | 1 | 1,5 |
| RCT (ratio chaîne/trame) | 35/65 | 41/59 | 73/27 |
| Epaisseur obtenue en moulage (mm) | 4,1 | 2,1 | 3,1 |

En gardant les paramètres de la première 16 et seconde 18 portion de la première partie 22 de la structure fibreuse 20 de l'exemple du tableau 3, l'épaisseur de la deuxième partie 24 est réduite davantage, en modifiant le ratio chaîne-trame à 73/27 en réduisant le nombre de plan de trames de la deuxième partie 24 de la structure fibreuse 20, passant de 16 à 7.

Une épaisseur de 3,1 mm est alors obtenue pour cette deuxième partie 24 contre 4,2 mm pour la structure décrite en référence au tableau 3.

Ainsi, l'invention concerne également le procédé de fabrication des structures fibreuses 20 telles que décrites en référence aux tableaux 2 à 4.

Le procédé de fabrication de tissage d'une structure fibreuse 20 selon l'invention, comprend ainsi une étape consistant à diminuer l'écartement entre deux plans de trame successifs le long de la direction chaîne et à diminuer le nombre de fil de trame lors d'une transition selon la direction chaîne d'une première partie de la texture fibreuse à une deuxième partie 24 de la texture fibreuse 20 ayant une épaisseur supérieure à celle de la première partie 22.

Le procédé de fabrication comprend également une étape consistant à augmenter le nombre de fils de trame et diminuer l'écartement entre deux plans de trames successifs le long de la direction de chaine, lors de la transition en direction de chaine de la deuxième partie 24 de la texture fibreuse 20 à la première partie 22 de la texture fibreuse 20.

Les structures fibreuses 20 ainsi obtenues, peuvent alors être utilisées pour la fabrication d'une pièce composite, par exemple d'un secteur de stator 12, tel que décrit précédemment. Ainsi, l'invention porte également sur un procédé de fabrication d'un matériau composite, comprenant les étapes suivantes :
a) Obtenir une structure fibreuse 20 au moyen du procédé tel que présenté ci-dessus ;
b) Conformer la structure fibreuse 20 ;
c) Obtenir un matériau composite par injection ou densification d'une matrice à l'intérieur de la structure fibreuse.

L'étape b) consiste à obtenir à partir de la structure fibreuse 20 une préforme fibreuse destinée à former le renfort fibreux de la pièce composite. Cette préforme fibreuse présente une forme voisine de la pièce composite. Ainsi, dans l'exemple d'un secteur de stator 12 tel que décrit précédemment, la structure fibreuse 20 tissées est conformée en « Pi », c'est-à-dire, que les première portions 16 des première 22 et troisième 26 partie de la structure fibreuse 20, sont disposées de sorte à former un angle avec les secondes portions 18 des première 22 et troisièmes 26 parties et avec la deuxième partie 24 (ces trois derniers étant sensiblement alignés). Cela est réalisé à l'aide d'outils de conformation, permettant de maintenir la préforme dans une forme voisine de celle de la pièce à fabriquer.

La pièce composite est alors obtenue par densification de la préforme fibreuse c'est-à-dire en injectant une matrice à l'intérieur de la structure fibreuse conformée. La matrice peut être une résine ou, dans le cas d'un matériau composite dit thermostructural, un matériau réfractaire tel que carbone ou céramique.

L'injection de matrice peut être réalisé par exemple par infiltration chimique en phase vapeur (en anglais Chemical Vapour Infiltration CVI), par le procédé connu sous l'acronyme anglais PIP pour *Polymer Infiltration And Pyrolysis* ou tout autre procédé classiquement connu pour la conception de pièces CMC.

## Revendications

1. Structure fibreuse (20) multicouches tissée tridimensionnellement présentant un même nombre de fils de chaîne tissés à tout niveau le long de la direction chaîne, la structure fibreuse (20) comprenant, en direction chaîne, une première partie (22) et une deuxième partie (24), la première partie (22) ayant une épaisseur, mesurée dans une direction perpendiculaire aux directions chaîne et trame, supérieure à la deuxième partie (24), **caractérisée en ce que**, l'écartement entre deux plans de trame le long de la direction chaîne est supérieur dans la deuxième partie à celui de la première partie (22), et **en ce que** le nombre de fils de trame par plan de trame de la deuxième partie est inférieur au nombre de fil de trame par plan de trame de la première partie, la première partie (22) de la structure fibreuse (20) comprenant une première portion (16) et une seconde portion (18), la première portion (16) étant agencée, selon ladite direction perpendiculaire, au-dessus d'une seconde portion (18) et étant structurellement indépendante de la seconde portion (18), lesdites première portion (16) et seconde portion (18) de la première partie (22) étant tissées à la deuxième partie (24) au niveau d'une transition de la première partie (22) à la deuxième partie (24).

2. Structure fibreuse (20) selon la revendication 1, dans laquelle le nombre de fils de trame est supérieur au nombre de fils de chaîne dans l'une et/ou l'autre de la première portion (16) et de la seconde portion (18).

3. Structure fibreuse (20) selon la revendication 1 ou 2, dans laquelle, dans la deuxième partie (24), le nombre de fils de trame est inférieur au nombre de fils de chaînes.

4. Structure fibreuse (20) selon l'une des revendications 1 à 3, dans laquelle l'écartement entre deux plans de chaîne est identique entre la première partie (22) et la deuxième partie (24).

5. Structure fibreuse (20) selon l'une des revendications 1 à 3, dans laquelle l'écartement entre deux plans de chaîne est différent.

6. Structure fibreuse (20) selon l'une des revendications 1 à 5, comprenant une troisième partie (26) identique à la première partie (22) et tissée à la deuxième partie (24) le long de la direction chaîne à l'opposé de la première partie (22).

7. Procédé de fabrication d'une structure fibreuse (20) selon l'une des revendications 1 à 6, dans lequel lors de la transition en direction chaîne de la première partie (22) de la texture fibreuse (20) à la deuxième partie (24) de la texture fibreuse (20), on diminue le nombre de fils de trame et on augmente l'écartement entre deux plans de trame successifs le long de la direction chaîne.

8. Procédé de fabrication d'une structure fibreuse (20) selon l'une des revendications 1 à 6, dans lequel lors de la transition en direction de chaine de la deuxième partie (24) de la texture fibreuse (20) à la première partie (22) de la texture fibreuse (20), on augmente le nombre de fils de trame et on diminue l'écartement entre deux plans de trames successifs le long de la direction de chaine.

9. Procédé de fabrication d'un matériau composite, comprenant les étapes suivantes :
a) Obtenir une structure fibreuse (20) au moyen du procédé selon la revendication 7 ou 8 ;
b) Conformer la structure fibreuse (20) ;
c) Obtenir un matériau composite par injection d'une matrice à l'intérieur de la structure fibreuse (20).

## Patentansprüche

1. Dreidimensional gewebte, mehrlagige Faserstruktur (20) mit einer gleichen Anzahl von auf jeder Ebene entlang der Kettrichtung verwebten Kettfäden, wobei die Faserstruktur (20) in Kettrichtung ein erstes Teil (22) und ein zweites Teil (24) umfasst, wobei das erste Teil (22) eine Materialstärke, gemessen in einer Richtung senkrecht zur Kett- und Schussrichtung, aufweist, die größer ist als die des zweiten Teils (24),
**dadurch gekennzeichnet, dass** der Abstand zwischen zwei Schussebenen entlang der Kettrichtung im zweiten Teil größer ist als im ersten Teil (22), und dass die Anzahl der Schussfäden pro Schussebene im zweiten Teil geringer ist als die Anzahl der Schussfäden pro Schussebene im ersten Teil, wobei das erste Teil (22) der Faserstruktur (20) einen ersten Abschnitt (16) und einen zweiten Abschnitt (18) umfasst, wobei der erste Abschnitt (16) in der genannten senkrechten Richtung über einem zweiten Abschnitt (18) angeordnet ist und strukturell unabhängig von dem zweiten Abschnitt (18) ist, wobei der erste Abschnitt (16) und der zweite Abschnitt (18) des ersten Teils (22) an einem Übergang von dem ersten Teil (22) zu dem zweiten Teil (24) mit dem zweiten Teil (24) verwebt sind.

2. Faserstruktur (20) nach Anspruch 1, wobei in dem einen und/oder anderen Abschnitt aus erstem Abschnitt (16) und zweitem Abschnitt (18) die Anzahl der Schussfäden größer ist als die Anzahl der Kettfäden.

3. Faserstruktur (20) nach Anspruch 1 oder 2, wobei in dem zweiten Teil (24) die Anzahl der Schussfäden geringer ist als die Anzahl der Kettfäden.

4. Faserstruktur (20) nach einem der Ansprüche 1 bis 3, wobei zwischen dem ersten Teil (22) und dem zweiten Teil (24) der Abstand zwischen zwei Kettebenen gleich ist.

5. Faserstruktur (20) nach einem der Ansprüche 1 bis 3, wobei der Abstand zwischen zwei Kettebenen unterschiedlich ist.

6. Faserstruktur (20) nach einem der Ansprüche 1 bis 5, umfassend ein drittes Teil (26), das mit dem ersten Teil (22) identisch ist und entlang der Kettrichtung dem ersten Teil (22) gegenüberliegend mit dem zweiten Teil (24) verwebt ist.

7. Verfahren zur Herstellung einer Faserstruktur (20) nach einem der Ansprüche 1 bis 6, wobei beim Übergang in Kettrichtung vom ersten Teil (22) der Fasertextur (20) zum zweiten Teil (24) der Fasertextur (20) die Anzahl der Schussfäden verringert und der Abstand zwischen zwei aufeinanderfolgenden Schussebenen entlang der Kettrichtung vergrößert wird.

8. Verfahren zur Herstellung einer Faserstruktur (20) nach einem der Ansprüche 1 bis 6, wobei beim Übergang in Kettrichtung vom zweiten Teil (24) der Fasertextur (20) zum ersten Teil (22) der Fasertextur (20) die Anzahl der Schussfäden erhöht und der Abstand zwischen zwei aufeinanderfolgenden Schussebenen entlang der Kettrichtung verringert wird.

9. Verfahren zur Herstellung eines Verbundmaterials, umfassend die folgenden Schritte:
a) Erhalten einer Faserstruktur (20) durch das Verfahren nach Anspruch 7 oder 8 ;
b) Formen der Faserstruktur (20) ;
c) Erhalten eines Verbundmaterials durch Einbringen einer Matrix in das Innere der Faserstruktur (20).

## Claims

1. Three-dimensionally woven multilayer fibrous structure (20) having the same number of warp yarns woven at any level along the warp direction, the fibrous structure (20) comprising, in the warp direction, a first part (22) and a second portion (24), the first part (22) having a thickness measured in a direction perpendicular to the warp and weft directions, greater than the second part (24), **characterised in that** the spacing between two weft planes along the warp direction is greater in the second portion than in the first part (22), and **in that** the number of weft yarns per weft plane of the second part is lower than the number of weft yarns per weft plane of the first part, the first part (22) of the fibrous structure (20) comprising a first portion (16) and a second portion (18), the first portion (16) being arranged in said perpendicular direction, over a second portion (18) and being structurally independent of the second portion (18), said first portion (16) and second portion (18) of the first part (22) being woven to the second part (24) at a transition from the first part (22) to the second part (24)

2. Fibrous structure (20) according to claim 1, wherein the number of weft yarns is greater than the number of warp yarns in one and/or other of the first portion (16) and the second portion (18).

3. Fibrous structure (20) according to claim 1 or 2, wherein in the second part (24) the number of weft yarns is lower than the number of warp yarns.

4. Fibrous structure (20) according to any one of claims 1 to 3, wherein the spacing between two warp planes is identical between the first part (22) and the second part (24).

5. Fibrous structure (20) according to any one of claims 1 to 3, wherein the spacing between two warp planes is different.

6. Fibrous structure (20) according to any one of claims 1 to 5, comprising a third part (26) identical to the first part (22) and woven to the second part (24) along the warp direction opposite the first part (22).

7. Method for manufacturing a fibrous structure (20) according to any one of claims 1 to 6, wherein during the transition in the warp direction from the first part (22) of the fibrous texture (20) to the second part (24) of the fibrous texture (20), the number of weft yarns is reduced and the spacing between two successive weft planes along the warp direction is increased.

8. Method for manufacturing a fibrous structure (20) according to any one of claims 1 to 6, wherein during the transition in the warp direction from the first part (24) of the fibrous texture (20) to the second part (22) of the fibrous texture (20), the number of weft yarns is reduced and the spacing between two successive weft planes along the warp direction is increased.

9. Method for manufacturing a composite material, comprising the following steps:
a) Obtaining a fibrous structure (20) by means of the method according to claim 7 or 8;
b) Shaping the fibrous structure (20);
c) Obtaining a composite material by injecting a matrix inside the fibrous structure (20).
